# EUROPEAN PATENT APPLICATION

(11) **EP 1 100 239 A2**
(43) Date of publication of application: **16.05.2001**
(21) Application number: 00124538.0
(22) Date of filing: 09.11.2000
(51) Int. Cl.: H04L 29/06, G06F 17/30

(54) **Method and system for property page management**

(30) Priority: 10.11.1999 US 437281
(71) Applicant: Attachmate Corporation, Bellevue, Washington 98006 (US)
(72) Inventor: Provo, Nathan Jack, Maple Valley, Washington 98038 (US); Clarke, David James, Newcastle, Washington 98059 (US)
(74) Representative: Grünecker, Kinkeldey, Stockmair & Schwanhäusser Anwaltssozietät

(57) **Abstract**

A system and method for property page management utilizes a property page set document to describe a set of property pages. The property page set document is stored on a server computer and transmitted to a client computer via a communication network. The client runs a browser, or other graphical user interface, to request a property page set associated with theproperty page set document, however, the server first sends an applet object that assists the browser in handling the extensible markup language found in the property page set document . The client using the applet object then parses out and builds from the property page set document multiple property pages that are cached on the client. The client to furnish values to the property pages uses a separate data set document, also in extensible markup language, received from the server. Alternatively, values are embedded for the property pages are in the property page set document. When a user makes changes to any values of a property page, the changes are incorporated into either the property page set document or the data set document stored on the client. The client waits until the user finishes using the property page set with updated values before sending updated data set document, or alternatively, the updated property page set document to the server. Other embodiments manage types of displayable information structures other than the property pages.

## Description

### TECHNICAL FIELD

The invention relates generally to the transfer of information across a computer network and display of the transferred information, and more particularly, to management of displayable information structures, such as property pages, related to network access, retrieval, storage, and updating.

### BACKGROUND OF THE INVENTION

Information systems utilizing browser systems have greatly increased the amount and complexity of information being remotely accessed over computer networks such as the Internet and corporate intranets. These information systems typically include remote server computers that communicate with client computers. The remote server computers store information to be accessed, manipulated, updated, and created by information users. In turn, the client computers support browsers that provide user interfaces for information users to access, manipulate, update and create the information stored on the servers.

These browser based information systems use languages such as hypertext markup language (html) to represent information in documents, known as web pages. Typically, a collection of web pages, known as a web site, is stored on a server. Upon user request, one or more web pages are sent over a computer network to a browser on a client computer that will interpret the html descriptions found in the web pages and display the web pages for the user.

A browser display typically displays information and controls contained in a web page. The controls can provide links to additional information. Typically, a browser will display a first web page in its display area. Additional information may then replace the entire first web page being displayed or may only replace part of the first web page being displayed by the browser.

What has become a source of frustration is the amount of delay associated with displaying additional information once the first web page is displayed. When a control is activated to access additional information, the browser sends a request to the server for the additional information. The server responds by sending the additional information to the associated client system. Unfortunately, a user may wait an unreasonable amount of time for the request to be serviced by a busy network or server.

Frustration over further delay is caused by how the browser user must modify information. Since browser systems typically do not retain any indications as to how web pages have been modified, before additional information is viewed, any changes made by the browser user to the currently viewed information must be saved to the server.

Frustration over still further delay is caused by conventional cache management techniques that limit the types of web page items that can be saved on the client for subsequent review. These limitations require further network requests of the server. Conventional cache management techniques also cause other problems stemming from cache selection being based solely on duration since last transaction. Synchronization problems can occur between the information contained in different transmissions of web page information from a server if updates are based solely on duration since the last transaction. Also, these conventional cache management techniques necessitate a micro-management checking of cache status for each download of each portion of a displayed web page, which may further add delay in processing of information to be viewed by a browser user.

### SUMMARY OF THE INVENTION

The present invention resides in method and system for property page management. Aspects of the method and system include a communication system comprising a server computer system and a client system. The server computer system includes a server storage. The client computer system comprises a client storage, a client interpreter, and a graphical user interface. The graphical user interface is configured to display displayable information structures one at a time on at least a portion of the graphical user interface. The communication system further comprises a communication network coupled to the server computer and the client computer and a display document. The display document is configured to be stored by the server storage, to be transported between the server computer and the client computer via the communication network, to be stored by the client storage, and to be used by the client interpreter to build a set of displayable information structures for storage by the client storage and for display of the set of displayable information structures one at a time on at least the portion of the graphical user interface.

Further aspects of the method and system include the display document being written in extensible markup language and wherein the displayable information structures are property pages. Other aspects include the graphical user interface being a browser and the client interpreter being an applet object. The displayable information structures in some aspects are configured to be displayed in random order fashion.

### BRIEF DESCRIPTION OF THE DRAWINGS

Figure 1 is a block diagram of a computing system suitable for employing aspects of the invention to store, transmit and display portions of web pages.

Figures 2 - 4 are illustrations of exemplary property pages as used by the present invention.

Figure 5 is a transmission analysis chart of transmissions between a client computer and a server computer as incorporated in the system and method of the depicted embodiment of the present invention.

Figure 6 is a flowchart of a procedure performed by the applet object of the depicted embodiment to process xm1 property page set documents received from the server computer by the client computer.

### DETAILED DESCRIPTION OF THE INVENTION

A system and related method for management of displayable information structures is described. In the following description, numerous specific details are provided, such as specific types of displayable information structures, network architectures, storage methods, etc., to provide a thorough understanding of embodiments of the invention. One skilled in the relevant art, however, will recognize that the invention can be practiced without one or more of these specific details, or with other displayable information structures, network architectures, storage methods, etc. In other instances, well-known structures or operations are not shown, or not described in detail, to avoid obscuring aspects of the invention or for brevity.

The systems and methods of the present invention are useful for server management and browser processing of property pages as described below, but need not be so limited. The systems and methods are also useful for management and processing of other displayable information structures not based upon property pages.

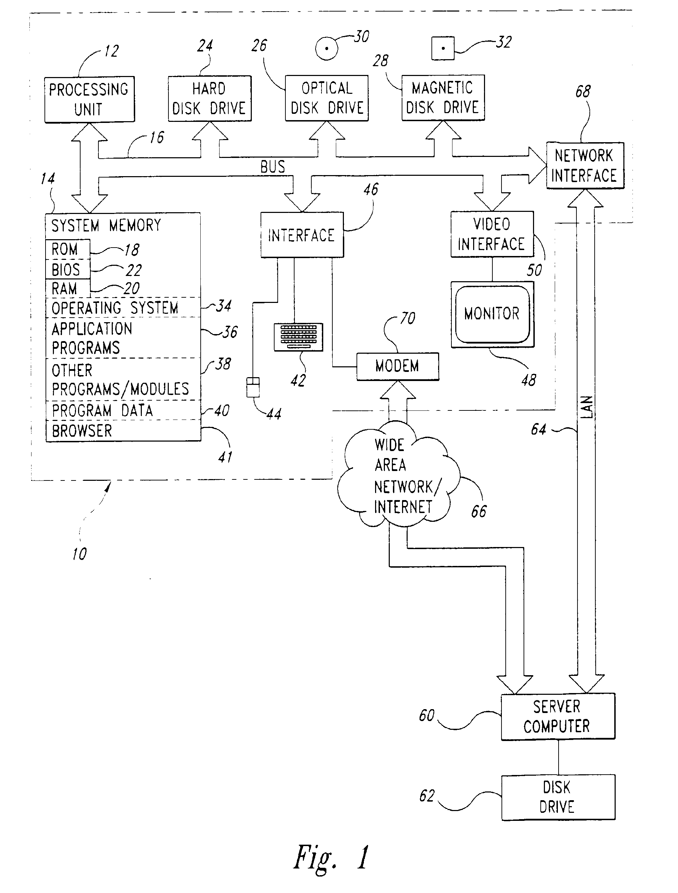

Figure 1 and the following discussion provide a brief, general description of a suitable computing environment in which the invention can be implemented. Although not required, embodiments of the invention will be described in the general context of computer-executable instructions, such as program application modules, objects, or macros being executed by a personal computer. Those skilled in the relevant art will appreciate that the invention can be practiced with other computer system configurations, including hand-held devices, multiprocessor systems, microprocessor-based or programmable consumer electronics, network PCs, mini computers, mainframe computers, and the like. The invention can be practiced in distributed computing environments where tasks or modules are performed by remote processing devices, which are linked through a communications network. In a distributed computing environment, program modules may be located in both local and remote memory storage devices.

Referring to Figure 1, a conventional personal computer referred herein as a client computer 10 includes a processing unit 12, a system memory 14 and a system bus 16 that couples various system components including the system memory to the processing unit. The processing unit 12 may be any logic processing unit, such as one or more central processing units (CPUs), digital signal processors (DSPs), application-specific integrated circuits (ASIC), etc. Unless described otherwise, the construction and operation of the various blocks shown in Figure 1 are of conventional design. As a result, such blocks need not be described in further detail herein, as they will be understood by those skilled in the relevant art.

The system bus 16 can employ any known bus structures or architectures, including a memory bus with memory controller, a peripheral bus, and a local bus. The system memory 14 includes read-only memory ("ROM") 18 and random access memory ("RAM") 20. A basic input/output system ("BIOS") 22, which can form part of the ROM 18, contains basic routines that help transfer information between elements within the client computer 10, such as during start-up.

The client computer 10 also includes a hard disk drive 24 for reading from and writing to a hard disk (not shown), and an optical disk drive 26 and a magnetic disk drive 28 for reading from and writing to removable optical disks 30 and magnetic disks 32, respectively. The optical disk 30 can be a CD-ROM, while the magnetic disk 32 can be a magnetic floppy disk. The hard disk drive 24, optical disk drive 26 and magnetic disk drive 28 communicate with the processing unit 12 via the bus 16. The hard disk drive 24, optical disk drive 26 and magnetic disk drive 28 may include interfaces or controllers (not shown) coupled between such drives and the bus 16, as is known by those skilled in the art. The drives 24, 26 and 28, and their associated computer-readable media, provide nonvolatile storage of computer readable instructions, data structures, program modules and other data for the client computer 10. Although the depicted client computer 10 employs a hard disk, optical disk 30 and magnetic disk 32, those skilled in the relevant art will appreciate that other types of computer-readable media that can store data accessible by a computer may be employed, such as magnetic cassettes, flash memory cards, digital video disks ("DVD"), Bernoulli cartridges, RAMs, ROMs, smart cards, etc.

Program modules can be stored in the system memory 14, such as an operating system 34, one or more application programs 36, other programs or modules 38 and program data 40. The system memory 14 also includes a browser 41 for permitting the client computer 10 to access and exchange data with web sites of the Internet, corporate intranets, or other networks as described below. While shown in Figure 1 as being stored in the system memory 14. the operating system 34, application programs 36, other modules 38, program data 40 and browser 41 can be stored on the hard disk of the hard disk drive 24, the optical disk 30 of the optical disk drive 26 and/or the magnetic disk 32 of the magnetic disk drive 28.

A user can enter commands and information into the client computer 10 through input devices such as a keyboard 42 and a pointing device such as a mouse 44. Other input devices can include a microphone, joystick, game pad, scanner, etc. These and other input devices are connected to the processing unit 12 through an interface 46 such as a serial port interface that couples to the bus 16, although other interfaces such as a parallel port, a game port or a universal serial bus ("USB") can be used. A monitor 48 or other display device is coupled to the bus 16 via a video interface 50, such as a video adapter. The client computer 10 can include other output devices, such as speakers, printers, etc.

The client computer 10 can operate in a networked environment using logical connections to one or more remote computers, such as a server computer 60. The server computer 60 can be another personal computer, a server, or other type of computer, and typically includes many or all of the elements described above for the client computer 10. Typically, the server computer 60 includes a storage device such as a disk drive 62 shown in Figure 1. The server computer 60 is logically connected to the client computer 10 under any known method of permitting computers to communicate, such as through a local area network ("LAN") 64 or a wide area network ("WAN") or the Internet 66. Such networking environments are well known in offices, enterprise-wide computer networks, intranets and the Internet.

When used in a LAN networking environment, the client computer 10 is connected to the LAN 64 through an adapter or network interface 68 (coupled to the bus 16). When used in a WAN networking environment, the client computer 10 often includes a modem 70 or other device for establishing communications over the WAN/Internet 66. The modem 70 is shown in Figure 1 as coupled between the interface 46 and the WAN/Internet 66. In a networked environment, program modules, application programs, or data, or portions thereof, can be stored in the server computer 60, such as in the disk drive 62. Those skilled in the relevant art will readily recognize that the network connections shown in Figure 1 are only some examples of establishing communication links between computers, and other links may be used, including wireless links.

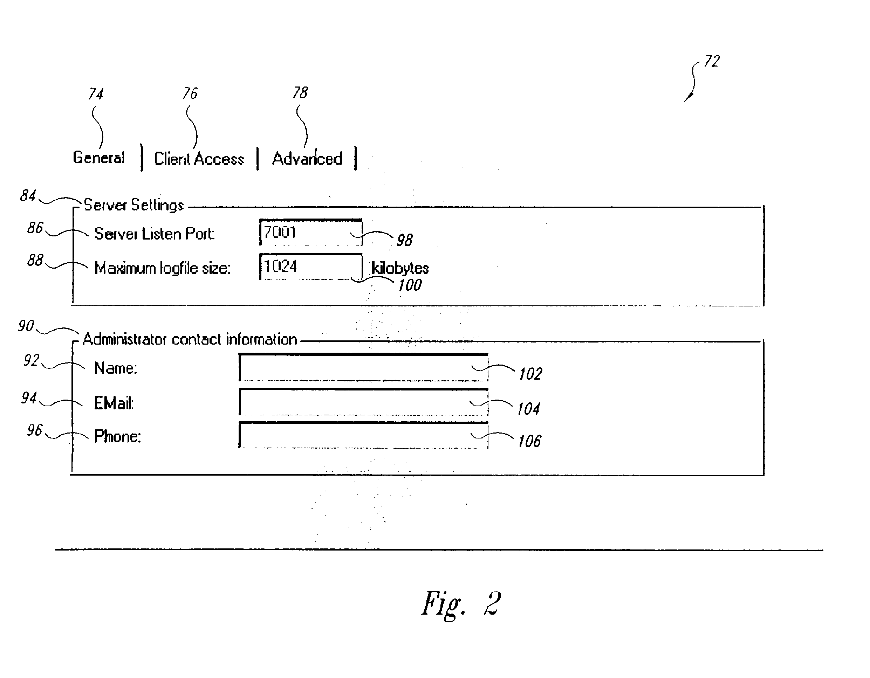

In the depicted embodiment, the browser 41 displays web pages on the monitor 48 that contain property pages, which are generally known in the art of graphical user interfaces (GUIs). An example of a property page 72 is shown in Figure 2. Typical to property pages are tab controls such as General tab 74, Client Access tab 76 and Advanced tab 78 shown in Figure 2. A set of tab controls allows selection of a particular property page from a set of property pages, for instance, the set of tabs 74-78 as shown in Figure 2. The property page 72 shown in Figure 2 is associated with the General tab 74 because the General tab is displayed in Figure 2 as being on top of the other tabs 76 and 78 of the set of tabs 74-78.

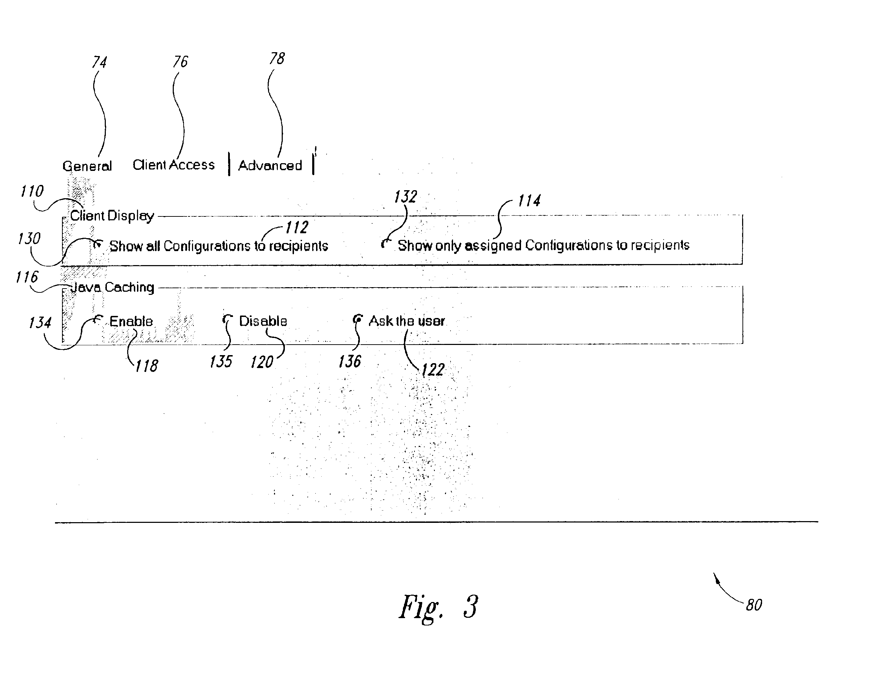

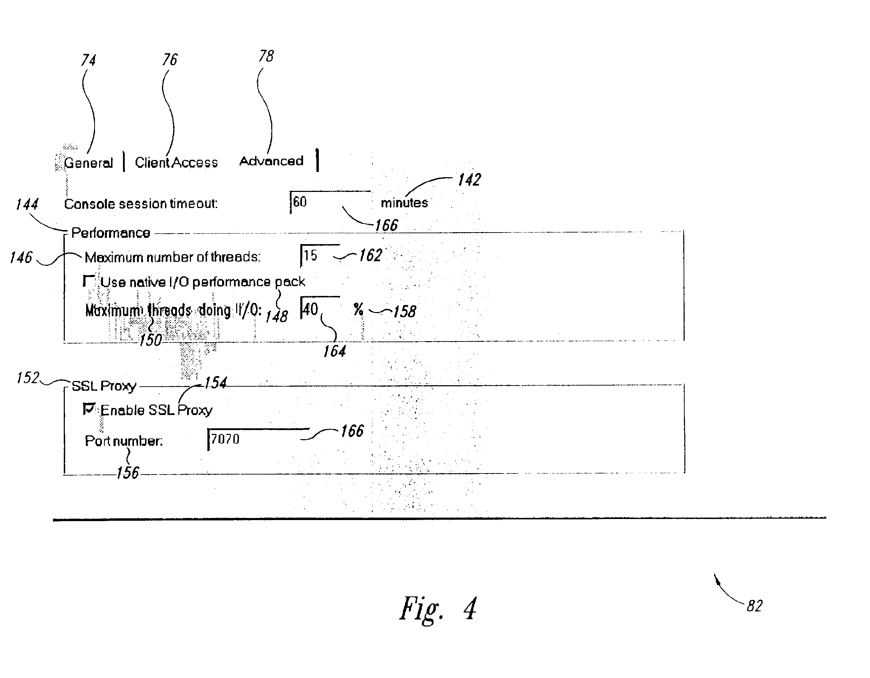

An associated feature of property pages is illustrated by the set of property pages 72, 80, and 82 shown in Figures 2, 3 and 4, respectively, in that the property pages of a property page set are displayed one at a time in a random access order, based upon user selection, in the same browser area. User selection of a property page occurs in the depicted embodiment by the user clicking on a selected one of the tabs 74-78 with the pointing device 44. As is typical with property pages, the General property page 72 contains fixed information such as labels 84-96 and data entry areas 98-106; the Client Access property page 80 contains fixed information such as labels 110-122 and data entry areas 130-136; and the Advanced property page 82 contains fixed information such as labels 140-156 and data entry areas 160-166. The data entry areas may contain default data, remain unfilled, or may be filled in by a browser user. Other property pages have other areas designated for other kinds of information that is more graphically oriented that could also be either fixed or contain areas for data entry that can be modified by a browser user. Other embodiments of the invention utilize sets of displayable information structures other than property pages that also are displayed one at a time in either a random access order based upon user selection, in a serial order or some other order in the same browser area.

In the depicted embodiment, the entire browser display area can be allocated for display of the selected one of the set of property pages 72, 80, and 82 so that, for instance, when displayed, the General property page 72 would occupy the entire display area of the browser 41. Alternatively, the selected one of the set of property pages 72, 80, and 82 could be displayed in a designated display portion of the browser 41 with other displayable items, such as displayable frames, occupying the remaining display portions of the browser

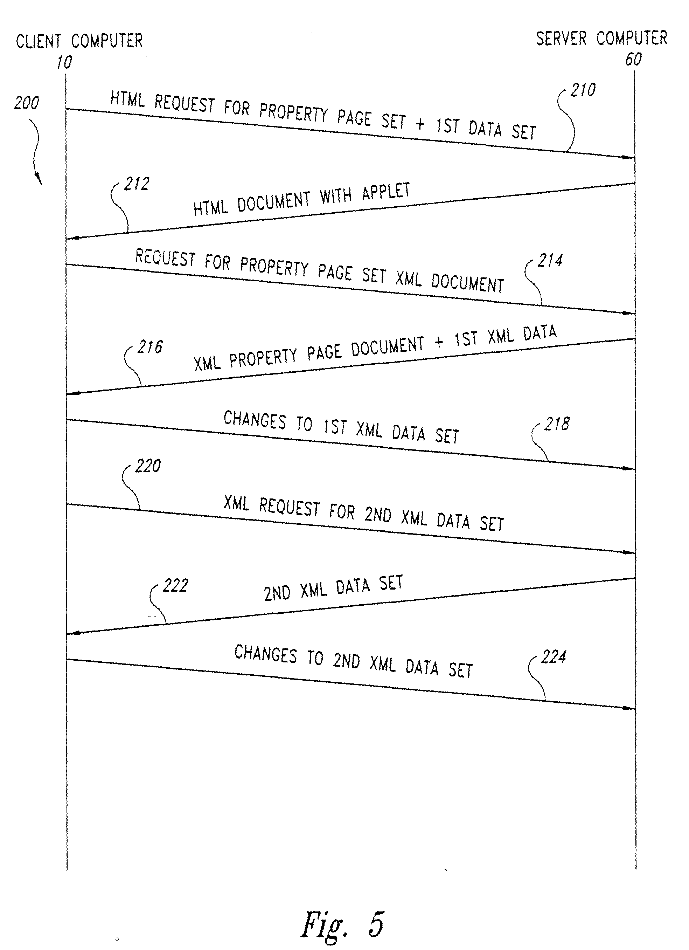

The depicted embodiment provides a system and method for requesting a property page set and modifying data sets associated with the property page set as shown in transmission history 200 in Figure 5. In transmission 210, the client computer 10 running the browser 41 first sends an html request to the server computer 60 for a property page set and a first data set. In other embodiments, the browser 41 requests a property page set without a specific request for a data set, and the server 60 furnishes a default data set.

In transmission 212, the server 60 sends an html document containing at least enough description of a rudimentary frame containing a Java applet object, which is used by the client computer 10 as an interpreter of xm1 documents. For the depicted embodiment, as explained further below, the applet object, as an interpreter, parses xm1, builds property pages from xm1 documents furnishes values from other xm1 documents to the property pages, modifies the values and property pages, caches the property pages, values and modifications in the RAM 20 or the disk drive 24 of the client computer system 10, and sends the modifications back to the server computer system 60 in the form of modified xm1 documents. The html document also contains a parameter containing a network address of an extensible markup language (xm1) property page set document associated with the requested property page set. Upon receipt of the html document, the client computer 10 runs the applet object as another program 38, which temporarily intercedes for the browser 41 regarding communication with the server computer 60. In transmission 214, the applet object running on the client computer 10 then uses the network address supplied in the html document to request the xm1 property page set document associated with the requested property page set.

In transmission 216, the server computer 60 sends the requested xm1 property page set document and a first data set to the client computer 10. In the depicted embodiment, the first data set is separate from the xm1 property page set document so that additional data sets can be associated with the xm1 property page set document. In alternative embodiments each xm1 property page set document has a data set embedded in each xm1 property page set document. Further embodiments have other separate data set documents associated with the xm1 property page set documents. These separate data set documents are written in xm1 language and furnish the values used by the applet object to fill in the data areas of the property pages built by the applet object from the xm1 property page set document.

As explained further below, the applet object uses the xm1 property page set document to build the property pages associated with the xm1 property page set document so that the browser 41 can then display the requested property page set. If the browser user changes any of the values associated with the requested property page set being displayed by the browser 41, the applet object reflects these changes in the first xm1 data set. When the browser user is finished viewing the requested property page set, the applet object transmits the changed xm1 data set back to the server computer 60 in transmission 218.

If these changes to the first data set are transmitted by sending only the actual changes to the server computer 60, the server computer then modifies the first xm1 data set document accordingly. Alternatively, the applet object can store changes by modifying the first xm1 data set document and then can update the server computer 60 by sending the entire modified first xm1 data set document to the server. In those embodiments that store data directly in a xm1 property page set document, the applet object makes all the modifications to the xm1 property page set document based upon all of the user changes to the requested property page set before sending the modified xm1 property page set document to the server computer 60. Typically, the client computer 10 sends any changes to a particular xm1 data set document or a particular xm1 property page set document to the server computer 60 once a user finishes using the particular xm1 data set document or the particular xm1 property page set document, respectively.

If the browser user desires another set of data for the associated property page set, the applet object then sends a request to the server computer 60 for a second xm1 data set in transmission 220. In response, the server computer 60 sends the second xm1 data set document to the client computer 10 whereby the applet object processes the second xm1 data set document similarly to the first xm1 data set document. Changes to the second xm1 data set document are also handled similarly to those described for the first xm1 data set document.

An xm1 property page set document for an associated property page set is organized based upon definable xm1 tags. Other languages could also be used to describe the property page sets. In the depicted embodiment, an xm1 property page set document begins and ends with a "property pages" start and end tag, respectively. Between the "property pages" start and end tags are a series of pairs of "property page" start and end tags. A pair of "property page" start and end tags corresponds to an individual property page of a property page set. Between each "property page" start and end tag is a series of xm1 descriptions of GUI features that can include, but is not limited to, those related to labels, textfields, checkboxes, radiobuttons, values, pairs of "groupbox" start and end tags, pairs of radiogroup start and end tags, or other types of pairs of start and end tags. The pairs of start and ends tags within a particular pair of "property page" start and end tags can further bound other xm1 descriptions of GUI features. Other embodiments also utilize descriptions for other GUI features as described with xm1 or other languages.

As explained, an xm1 property page set document associated with a property page set can contain embedded in the xm1 property page set document, data to be displayed in the data display areas of the property pages associated with the property page set. Alternatively, the depicted embodiment separates data from property page descriptions by utilizing separate xm1 documents for each data set. These xm1 data set documents begin and end with "data" start and end tags, respectively. Within the "data" start and end tags, property names and values are defined or left undefined for a browser user to update. For instance, for separated data, a separate xm1 data set document would exist for each of the set of property pages 72, 80, and 82 for the corresponding data entry areas 98-106, 130-136, and 160-166, respectively. Furthermore, other start and end tags such as "set" start and end tags can group other property name and value definitions within the "data" start and end tags.

In the depicted embodiment, the applet object sent in the initial transmission 210 from the server computer 60 to the client computer 10 running the browser 41 is written in the Java programming language. In general, the applet object intercedes for the browser 41 regarding communication with the server computer 60 in receiving the xm1 property page set documents and the data set documents because typically browsers are not constructed to process xm1 documents.

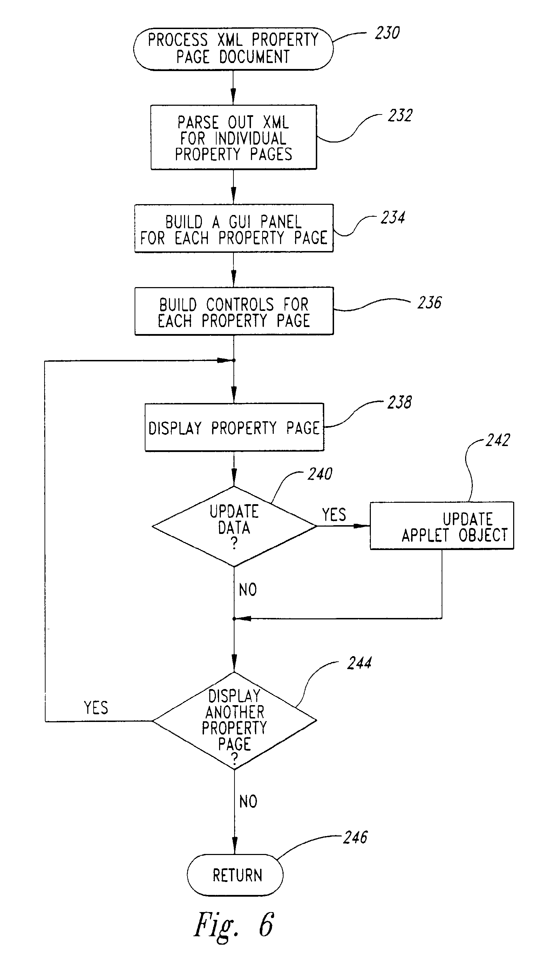

Upon receipt of the xm1 property page set document from the server computer 60 in transmission 216, the applet object processes the xm1 property page set document according to procedure 230 shown in Figure 6. The applet object contains an xm1 parser that parses out the descriptions for the individual property pages contained within the xm1 property page set document (step 232). After this parsing is complete, a builder portion of the applet object builds a GUI panel for each property page (step 234). The builder portion of the applet object then builds the controls for each property page according to the xm1 descriptions contained within each pair of property page tags (step 236) and assigns the controls for each property page as children of the GUI panel associated with each property page. All these display aspects for the property pages of the property page set are cached as a set, for instance in the RAM 20 or the disk drive 24 on the client computer 10 so that the property pages can be retrieved for viewing in a more rapid fashion than if they were individually accessed by the client computer 10 from the server computer 60. Viewing of the property pages can be done in rapid fashion even if the viewing is in a random order due to the caching of the property pages. The caching also allows for rapid retrieval of previously viewed property pages of a property page set.

Once all the display aspects of the property pages have been built, in the depicted embodiment, the browser 41 displays a first property page chosen by the browser user (step 238). Alternatively, the browser 41 can display a default property page if a first property page has not been chosen. If any data is to be entered, modified, or updated by the browser user (step 240), the procedure 230 updates the applet object (step 242), else no change to the applet object is necessary.

After viewing the property page being currently displayed by the browser 41, if the browser user chooses to view another property page of the property page set (step 244), the procedure 230 branches back for the browser to display the chosen property page (step 238), else the procedure 230 ends (step 246). Once the user is finished viewing the property page set with a first data set, the client computer 10, if necessary, updates the xm1 data set document associated with this first data set. Since the displayable aspects of the property page set are cached on the client computer 10, if a second xm1 data set document is sent to the client computer from the server computer 60, such as in transmission 222, the applet object does not have to repeat all the steps of procedure 230 to build up the panels and controls for the property page set. Instead, a data handler portion of the applet object need only process the data found in the second xm1 data set document to be displayed by the browser 41 to merge this data with the property page set cached on the client computer 10.

For example, a property page set directed to employee information could have three property pages generally similar to the property pages 72, 80, and 82, shown in Figures 2, 3, and 4 only directed to information related to employee benefits, employee compensation, and employee skills. Each employee would then have an associated data set containing information specific to the employee. For instance, based upon a user request from the client computer 10, the server computer 60 would send an employee xm1 property page set document associated with employee information and a first employee xm1 data set document associated with information on a first employee to the client computer. The browser 41 would then display property pages for benefits, compensation, and skills of the first employee based on which property pages the user selects to view. If the user requests information about a second employee, the client computer 10 first updates the xm1 data set document if there were any changes in state with the applet object related to data and then checks to see if the general employee property page set and second employee data set are cached on the client computer. In this case, the general employee property page set is cached since it was used in displaying information about the first employee. The second employee data set is not cached on the client computer, however, since it has not been viewed by the current user. Consequently, the client computer 10 receives the second xm1 data set document from the server computer 60 for subsequent display along with the general employee property page set by the browser 41.

In the depicted embodiment, the property page set built from an xm1 property page document and any data set used with the built property pages remain cached on the client computer 10 until at least such time as when the browser 41 is no longer displaying the property page set associated with the xm1 property page document. Other embodiments cache property page sets and data sets for longer or shorter periods of time depending upon, for example, performance and capacity factors related to the client computer 10.

Although the depicted embodiment has been described in terms of property pages, further embodiments are directed to other displayable information structures that are displayable by graphical user interfaces, such as by browsers, and are described in either xm1 documents or other documents based on other computer languages. These embodiments provide a single display document, such as written with xm1, that describes the displayable aspects of the information structures. In some of these embodiments, a data set is provided with the display document. In other of these embodiments, separate documents describing associated data sets are used.

The present invention, including the depicted embodiment, allow organization of displayable information structures beyond the concept of a web page and more in terms of a web book. A web book is a collection of displayable information structures that are transmitted, modified, and stored as an individual collective entity. Although the web book can be treated as a separate entity, unlike a web page, not all the displayable information structures of a web book need be displayed at once. Also, some or all of the displayable information structures may be displayed on the same browser area, one at a time, in a random access fashion.

For the embodiments using displayable information structures other than property pages, a browser on a client computer receives a display document written in xm1 or some other language that describes display aspects of a collection of displayable information structures. A program either incorporated into a browser, incorporated into another GUI application, or running in conjunction with a browser or another GUI application, interprets the display document to build the associated collection of displayable information structures (*e.g.,* web book) and temporarily or permanently stores the collection on the client computer to be displayed by the browser or another GUI application running on the client computer.

To further elaborate on the web book analogy, the collection of displayable information structures is similar to a book in that not all portions of the collection are viewed at once. Instead, each displayable information structure is viewed one at a time in the same display area of the browser or other GUI application. Also, similar to a book, the display document describing the collection of displayable data structures is transported as a single unit between server computer and client computer. Furthermore. just as a book can be updated as a new edition, the display document is updated regarding modifications to all displayable information structures of a collection before being sent back to the server computer.

Like a form book, data can be separated from the general form of the collection of displayable information structures, to be filled in by the browser or GUI user. In these embodiments, separate data files written in xm1 or another computer language accompany the display file to provide associated data for the data areas of the displayable data structures. These data files each contain a set of data for a collection of displayable data structures and if modified by a browser user, are updated at the client computer before being sent back to the server computer. In other embodiments, data for the data areas of the displayable data structures are embedded in the display document itself, so any modifications of data is done so directly to the display document.

From the foregoing it will be appreciated that, although specific embodiments of the invention have been described herein for purposes of illustration, various modifications may be made without deviating from the spirit and scope of the invention. Accordingly, the invention is not limited except as by the appended claims.

## Claims

1. A communication system comprising:
a server computer system including a server storage;
a client computer system comprising:
a client storage;
a client interpreter; and
a graphical user interface, the graphical user interface configured to display displayable information structures one at a time on at least a portion of the graphical user interface;
a communication network coupled to the server computer and the client computer; and
a display document configured to be stored by the server storage, the display document configured to be transported between the server computer and the client computer via the communication network, the display document configured to be stored by the client storage, and the display document configured to be used by the client interpreter to build a set of displayable information structures for storage of the set of displayable information structures by the client storage and for display of the set of displayable information structures one at a time on at least the portion of the graphical user interface.

2. The communication system of claim 1 wherein the display document is written in extensible markup language.

3. The communication system of claim 1 wherein the displayable information structures are property pages.

4. The communication system of claim 1 wherein the graphical user interface is a browser.

5. The communication system of claim 1 wherein the display documents are written in extensible markup language.

6. The communication system of claim 1 wherein the client interpreter is an applet object.

7. The communication system of claim 1 wherein the client interpreter and graphical user interface are combined in a single application.

8. The communication system of claim 1 wherein the client interpreter includes a parser configured to parse descriptions of the displayable information structures from the display document, whereby the interpreter builds a graphical user interface panel and controls from each description of a displayable information structure, the graphical user interface panels and controls being stored by the client storage.

9. The communication system of claim 1 wherein the displayable information structures are configured to be displayed in random order fashion.

10. The communication system of claim 1 wherein the client interpreter is configured to modify the display document based upon user input to the client computer system.

11. The communication system of claim 1 wherein the client interpreter is further configured to use first and second data set documents separate from the display document to provide a first set of values and a second set of values, respectively, for the set of displayable information structures built from the display document.

12. A client system for use with a server system, the server system connected to a communication network, the client system comprising:
a client network interface configured to connect the client system to the communication network;
a client storage;
an interpreter comprising:
a parser configured to parse a markup language display document based upon markup tags in the markup language display document, the markup language display document being received from the server system via the communication network;
a builder configured to build property pages from the parsed markup language display document and cache the built property pages in the client storage, the builder further configured to supply values to the built property pages from at least one markup language data set document; and
a modifier configured to modify either the markup language display document or the markup language data set document, the modifier configured to cache the modified markup language display document or the markup language data set document to the client storage, the client network interface configured to transmit the modified markup language display document or the modified markup language data set document to the server system; and
a browser configured to display the property pages one at a time in at least a portion of the browser.

13. The client system of claim 12 wherein the display document is written in extensible markup language.

14. The client system of claim 12 wherein the interpreter furnishes values for the property pages based upon a data set markup language document received by the client system from the server system via the communication network.

15. The client system of claim 12 wherein the interpreter is a Java applet object.

16. The client system of claim 12 wherein the interpreter and the browser are contained in a single application.

17. The client system of claim 12 wherein the interpreter is configured to parse displayable information structures from the markup language display document for other portions of the interpreter to build a panel and controls for each displayable information structure.

18. The client system of claim 12 wherein the client network interface is configured to receive the interpreter via the communication network before the client network interface receives the markup language display document.

19. The client system of claim 12 wherein the property pages are configured to be displayed by the browser in random order fashion including being displayed more than once.

20. The client system of claim 12 wherein the interpreter is configured to modify the display document.

21. A client system for use with a server system, the server system connected to a communication network, the client system comprising:
a client network interface configured to connect the client system to the communication network;
an interpreter comprising:
a parser configured to parse a display document, the display document being received from the server system via the communication network;
a builder configured to build displayable information structures from the parsed display document; and
a data handler to supply values to the displayable information structures from a data set document;
a graphical user interface configured to display a set of the displayable information structures by displaying less than all of the displayable information structures in the set at one time in at least a portion of the graphical user interface.

22. The client system of claim 21 wherein the display document is written in extensible markup language.

23. The client system of claim 21 wherein the displayable information structures are property pages.

24. The client system of claim 21 wherein the graphical user interface is a browser.

25. The client system of claim 21 wherein the interpreter is an applet object.

26. A server system for use with a client system, the client system having a graphical user interface, the client system being connected to a communication network, the server system comprising:
a network interface configured to connect to the communication network;
a storage device; and
a display document stored on the storage device of the server system, the display document configured to be sent to the client system via the communication network, the display document configured to be used by the client system to generate displayable information structures to be displayed one at a time on the graphical user interface of the client system.

27. The server system of claim 26 wherein the display document is written in extensible markup language.

28. The server system of claim 26 wherein the display document is configured to be used by the client system to generate displayable information structures which are property pages.

29. A computer-readable medium for storing computer-readable instructions, the instructions written to program a computer to perform a method, the method comprising:
sending a request from a client computer via a communication network for a display document;
receiving the requested display document at the client computer, the received display document containing descriptions of individual displayable information structures;
parsing out descriptions of individual displayable information structures from the display document:
building displayable information structures from the parsed out descriptions; and
displaying the displayable information structures one at a time on a graphical user interface of the client computer.

30. The method of claim 29, further comprising:
receiving a data set document;
supplying values from the data set document to the displayable information structures; and
displaying the values with the displayable information structures.

31. The method of claim 29, further comprising:
modifying values from a set of values related to the displayable information structures;
updating the set of values with the modified values to produce a modified set of values; and
sending the modified set of values to a server system via a communication network.

32. The method of claim 29 wherein the displayable information structures are property pages.

33. The method of claim 29 wherein the display document is written in an extensible markup language.

34. A display document stored on a computer-readable medium, the display document comprising:
a plurality of tag pairs; and
a plurality of descriptions of displayable information structures, the displayable information structures to be displayed one at a time on a graphical user interface, each description being delimitated by one of the plurality of tag pairs, each description comprising:
graphical user interface panel descriptions; and
graphical user interface control descriptions.

35. The display document of claim 34 wherein the display document is written in extensible markup language.

36. The display document of claim 34 wherein the displayable information structures are property pages.

37. The display document of claim 34 wherein the graphical user interface panel and control descriptions are browser panel and control descriptions.

38. A method for displaying information structures:
receiving a display document from storage via a network;
parsing out descriptions for individual information structures;
building the individual information structures from the parsed out descriptions;
displaying the individual information structures one at a time;
modifying at least one of the individual information structures;
changing the display document according to the at least one modified individual information structure; and
sending the changed display document to storage via the network.

39. A method for displaying information structures:
receiving a display document and a data document from storage via a network;
parsing out descriptions for individual information structures from the received display document;
building the individual information structures from the parsed out descriptions;
assigning values to the individual information structures based upon the received data document;
displaying the individual information structures one at a time;
modifying at least one of the values of the information structures;
changing the data document according to the at least one modified value; and
sending at least the changed value of the changed data document to storage via the network.

40. A method for displaying information structures, the method comprising:
receiving a display document from storage via a network;
parsing out descriptions for individual information structures from the received display document;
building the individual information structures from the parsed out descriptions; and
displaying the individual information structures one at a time.

41. A method for displaying property pages, the method comprising:
receiving a display document from storage via a network;
parsing out descriptions for individual property pages from the received display document;
building the individual property pages, including panels and controls, from the parsed out descriptions; and
displaying the individual property pages one at a time.
